# FASCICULE DE BREVET EUROPEEN

(11) **EP 2 776 258 B1**
(45) Date de publication et mention de la délivrance du brevet: **27.02.2019**
(21) Numéro de dépôt: 12798858.2
(22) Date de dépôt: 31.10.2012
(51) Int. Cl.: B60D 1/14, B60D 1/46, B60D 1/62, B60D 1/66, B60T 13/06, B60D 1/24

(54) **DISPOSITIF D'ATTELAGE/DETELAGE D'UNE REMORQUE A UN VEHICULE TRACTEUR ET PROCEDE ASSOCIE**
VORRICHTUNG ZUR KOPPLUNG UND ENTKOPPLUNG EINES ANHÄNGERS AN EIN/VON EINEM ZUGFAHRZEUG UND ENTSPRECHENDES VERFAHREN
DEVICE FOR COUPLING/UNCOUPLING A TRAILER TO/FROM A TOWING VEHICLE AND ASSOCIATED METHOD

(30) Priorité: 04.11.2011 FR 1160043
(43) Date de publication de la demande: 17.09.2014
(73) Titulaire: SANEF, 75015 Paris (FR)
(72) Inventeur: STAEBLER, Jean-Luc, 02000 Chambry (FR)
(74) Mandataire: Gevers & Orès
(86) Numéro de dépôt international: PCT/IB2012/056046
(87) Numéro de publication internationale: WO 2013/064992

(56) Documents cités:
- EP-A2- 2 022 654
- DE-A1-102004 034 105
- DE-U1- 9 202 227
- GB-A- 2 362 693
- US-A- 6 142 501
- US-A1- 2004 155 430
- US-A1- 2009 198 425
- US-A1- 2010 096 203

## Description

L'invention concerne un dispositif d'attelage/dételage d'une remorque à un véhicule tracteur, ainsi qu'un procédé associé.

Une remorque de signalisation est souvent utilisée pour signaler aux utilisateurs d'une autoroute une zone de travaux sur laquelle des personnes sont susceptibles d'intervenir.

L'installation ou l'enlèvement de ces remorques de signalisation est particulièrement dangereuse pour le conducteur du véhicule tracteur destiné à amener la remorque sur site, du fait que les véhicules continuent généralement de circuler pendant les travaux.

Afin d'améliorer la sécurité des personnes chargées d'installer ces remorques de signalisation, on cherche donc à limiter les interventions humaines sur la chaussée.

A cet effet, un dispositif d'attelage/dételage automatique de la remorque est particulièrement intéressant.

De tels dispositifs existent déjà.

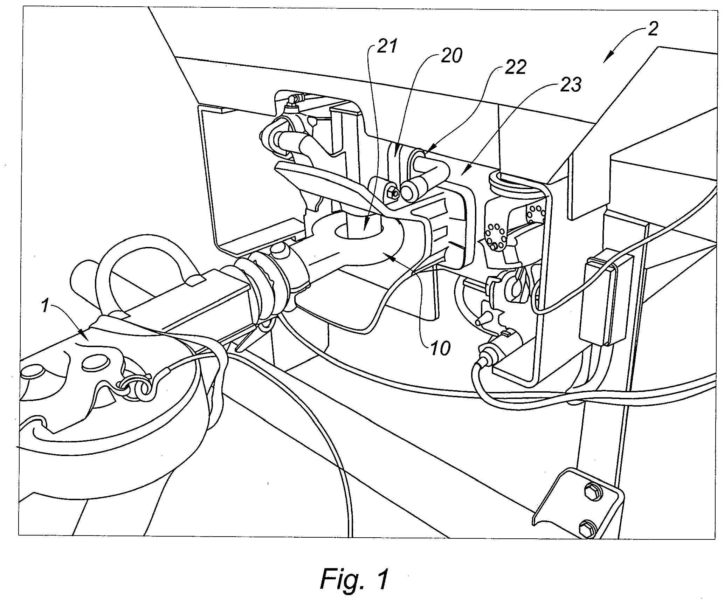

Par exemple, l'accrochage automatique peut s'effectuer entre une remorque 1 munie d'un anneau d'accrochage 10 et un véhicule tracteur 2 muni d'un attelage adapté, par exemple avec un axe de verrouillage 21 de l'anneau (figure1). Une caméra pour visualiser la zone d'accrochage entre la remorque et le véhicule tracteur est alors particulièrement utile. Cela permet au conducteur d'effectuer l'accrochage automatique de la remorque, sans descendre du véhicule.

Cependant, les dispositifs existants ne permettent pas d'éviter une intervention humaine sur la chaussée dans toutes les situations.

Par exemple, on a constaté que l'accrochage automatique n'était pas toujours possible lorsque l'on souhaitait récupérer la remorque de signalisation en raison d'un problème de positionnement relatif entre la remorque et le véhicule tracteur.

C'est le cas notamment lorsque le véhicule tracteur ayant déposé la remorque de signalisation a pris un chargement modifiant la hauteur de l'attelage de ce véhicule. Lorsqu'il vient récupérer la remorque, le conducteur constate alors que l'anneau 10 et l'attelage 20 sont décalés l'un par rapport à l'autre, selon la hauteur (axe vertical).

L'accrochage automatique de la remorque au véhicule tracteur n'est alors plus possible et le conducteur doit descendre de son véhicule pour régler la position en hauteur de la remorque.

Un exemple d'un réglage de la hauteur d'un moyen d'accrochage d'une remorque par télécommande est montré dans le document US 6,142,501.

Selon un autre exemple, les dispositifs existants ne permettent pas de serrer ou de libérer le frein de sécurité de la remorque sans intervention du conducteur sur la chaussée.

Un objectif de l'invention est donc de limiter encore plus les interventions humaines sur la chaussée autoroutière, lors de l'installation et/ou de l'enlèvement d'une remorque de signalisation par un véhicule tracteur.

A cet effet, l'invention propose un ensemble selon la revendication 1.

Grâce à ce dispositif, la sécurité des personnes chargées de la mise en place ou de l'enlèvement des remorques de signalisation est améliorée.

Le dispositif selon l'invention pourra également comprendre l'une au moins des caractéristiques suivantes, prises seules ou en combinaison :
- la remorque comprenant une roue jockey, ledit moyen pour modifier, par rapport au sol, la hauteur du moyen d'accrochage de la remorque est un vérin monté verticalement sur la roue jockey ;
- il est prévu une télécommande pour actionner directement le moteur du vérin de la roue jockey ;
- il est prévu un moyen pour déplacer l'attelage latéralement ;
- il est prévu plusieurs vérins de stabilisation de la remorque et un ou plusieurs moyen(s) de commande de la position desdits vérins de stabilisation, afin notamment de maintenir le réglage en hauteur de la remorque après dételage.
- le dispositif comprend un frein de sécurité pour la remorque, un capteur de proximité de la remorque par rapport au véhicule et, un moyen pour actionner ou libérer automatiquement ledit frein de sécurité, en fonction des données fournies par le capteur de proximité ;
- le capteur de proximité est relié par un câble au moyen d'actionnement/libération du frein de sécurité, le dit câble étant de préférence flexible et comportant une liaison électrique avec le moyen d'actionnement/libération du frein de sécurité ;
- le moyen pour actionner ou libérer le frein de sécurité de la remorque est un vérin dont la première extrémité est montée sur le bâti de la remorque et dont la deuxième extrémité est montée sur le frein de sécurité ;
- il est prévu, sur le véhicule tracteur, un fourreau destiné à recevoir l'extrémité du câble portant le capteur de proximité ;
- il est prévu au moins une caméra montée à l'arrière du véhicule tracteur et reliée à un écran de visualisation situé dans le poste de conduite du véhicule tracteur, pour visualiser la position relative du moyen d'accrochage de la remorque à l'attelage du véhicule tracteur ;
- il est prévu un système de transmission de données sans fil entre le véhicule tracteur et la remorque, lequel est au moins apte à gérer les différentes fonctions de signalisation de la remorque.

A cet effet, l'invention propose un procédé d'attelage automatique d'une remorque selon la revendication 11.

Le procédé selon l'invention pourra également comprendre l'une au moins des caractéristiques suivantes, prises seules ou en combinaison :
- pour modifier ladite hauteur, on modifie la position d'un vérin monté verticalement sur une roue jockey de la remorque ;
- le procédé comprend les étapes suivantes :
   o reculer le véhicule tracteur en direction de la remorque ;
   o détecter la position relative entre la remorque et le véhicule tracteur,
   o libérer automatiquement un frein de sécurité de la remorque, après que le détecteur a détecté l'attelage de la remorque au véhicule tracteur.
- il est prévu une étape de rétractation de la position de vérins de stabilisation de la remorque, après que la remorque a été attelé au véhicule tracteur ;
- l'attelage de la remorque au véhicule tracteur est visualisé par le conducteur du véhicule.

L'invention sera mieux comprise et d'autres buts, avantages et caractéristiques de celle-ci apparaîtront plus clairement à la lecture de la description qui suit et qui est faite au regard des dessins annexés, sur lesquels :

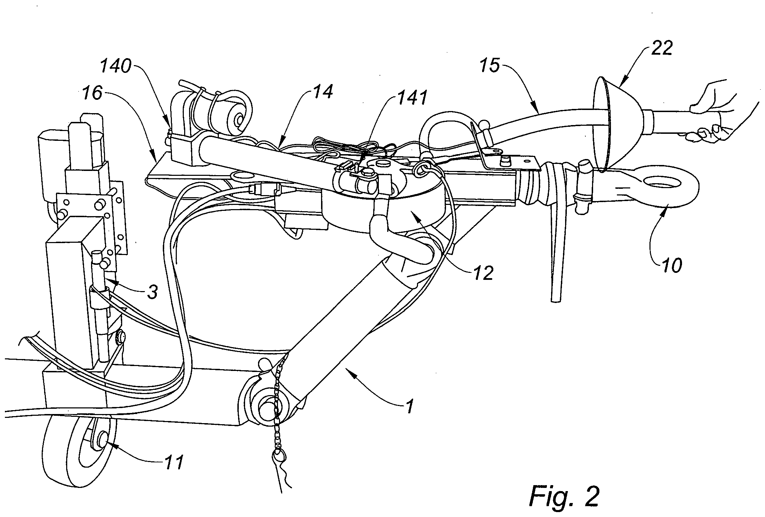

- la figure 2 est un schéma représentant un dispositif selon l'invention, selon une position représentative d'une situation d'attelage entre le véhicule tracteur et la remorque ;

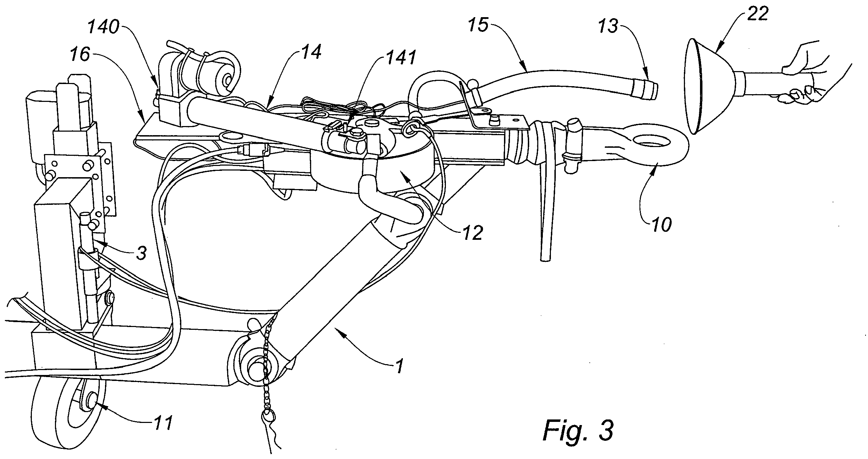

- la figure 3 est un schéma représentant le dispositif de la figure 2, selon une position représentative d'une situation de dételage entre le véhicule tracteur et la remorque ;
- la figure 4 est un schéma représentant un dispositif selon l'invention, au niveau d'un capteur de proximité entre l'attelage du véhicule tracteur et la remorque, lorsque ce capteur de proximité est connecté ;
- la figure 5 est un schéma représentant un dispositif selon l'invention, au niveau d'un capteur de proximité entre l'attelage du véhicule tracteur et la remorque, lorsque ce capteur de proximité est déconnecté.

Le dispositif d'attelage/dételage automatique de la remorque 1 au véhicule tracteur 2 comprend un moyen 3 pour modifier la hauteur, par rapport au sol, de l'anneau 10 de la remorque. Ce moyen 3 est avantageusement formé d'un vérin monté verticalement sur la roue jockey 11 de la remorque.

La commande du vérin 3 peut s'effectuer par une télécommande à disposition du conducteur du véhicule tracteur. La télécommande peut par exemple être reliée à un moyen récepteur (non référencé) situé sur la remorque et connecté électriquement au moteur du vérin 3.

Pour remplir la même fonction, il est également envisageable de prévoir un moyen pour modifier la hauteur, par rapport au sol, de l'attelage 20 du véhicule tracteur 2. A cet effet, il peut être envisagé d'installer entre l'arrière 22 de l'attelage 100 et la plaque de montage 23 de l'attelage 20 sur le véhicule tracteur 2, une glissière d'axe vertical.

Ce moyen de réglage de la hauteur de l'attelage 20 peut être fourni à titre alternatif au moyen 3 dédié à la remorque et remplissant une fonction similaire. Il peut alternativement être fourni en complément du moyen 3 dédie à la remorque.

La commande de ce moyen de modification de la hauteur de l'attelage 20 peut s'effectuer avec une télécommande à disposition du conducteur du véhicule.

Ainsi, si le conducteur du véhicule tracteur constate que l'anneau 10 de la remorque et l'attelage 20 du véhicule tracteur 2 sont décalés selon la hauteur (axe vertical), il peut appuyer sur la télécommande pour régler, à distance, la hauteur de l'anneau 10 de la remorque ou la hauteur de l'attelage 20 du véhicule tracteur 2, ou encore les deux, sans descendre du véhicule tracteur.

A cet effet, il peut en particulier être aidé par une caméra (non représentée) montée à l'arrière du véhicule tracteur 2, ladite caméra étant reliée à un écran de visualisation situé dans le poste de conduite du véhicule tracteur. La caméra permet en effet de visualiser la position relative du moyen d'accrochage de la remorque 1 à l'attelage 20 du véhicule tracteur 2.

Par ailleurs, le dispositif peut, en outre, prévoir des moyens pour modifier la position latérale (axe horizontal) de l'attelage 20 du véhicule tracteur 2. A cet effet, on peut prévoir un timon monté sur liaisons rotules sur le châssis du véhicule tracteur et sur l'attelage 20.

Le réglage latéral de la position de l'attelage 20 aide le conducteur de véhicule tracteur dans ses manoeuvres lors d'une opération d'attelage. En effet, s'il constate avec la caméra que le décalage latéral entre l'anneau 10 de la remorque 1 et l'attelage 20 du véhicule tracteur est faible, il est dans ce cas préférable de déplacer latéralement l'attelage 20, plutôt que d'effectuer une nouvelle manoeuvre de recul du véhicule.

Un réglage à la fois latéral et en hauteur de l'attelage 20 peut ainsi être effectué.

En variante, on pourrait ne prévoir, au niveau de l'attelage 20, qu'un réglage latéral de celui-ci. Celui-ci peut s'effectuer par l'installation d'une glissière horizontale entre l'arrière 22 de l'attelage 20 et la plaque de support 23. Dans ce cas, ce réglage latéral de l'attelage 20 est associé au réglage en hauteur (vertical) effectué au niveau de la remorque.

Bien entendu, le ou les réglage(s) de l'attelage est (sont) commandable(s) à distance par le conducteur du véhicule.

Il convient de noter que la remorque comprend généralement des vérins de stabilisation. Avantageusement, la remorque comprend un vérin de stabilisation à chaque angle de la remorque.

Ces vérins de stabilisation permettent de maintenir la remorque 1 dans une position stable sur la chaussée après dételage. En particulier, ils permettent donc de maintenir constante, après dételage, la hauteur de l'anneau 10 de la remorque, par rapport au sol.

En outre, la position des vérins de stabilisation peut être commandée par le conducteur du véhicule, depuis le poste de conduite de ce véhicule.

Là encore, le conducteur n'a donc pas besoin de descendre du véhicule pour stabiliser la remorque 2, après dételage.

Le dispositif selon l'invention peut également comprendre :
- un frein de sécurité 12 pour la remorque ;
- un capteur de proximité 13 de la remorque par rapport au véhicule;
- un moyen 14 pour actionner ou libérer automatiquement ledit frein de sécurité 13, en fonction des données fournies par le capteur de proximité 13.

Le capteur de proximité 13 est avantageusement relié par un câble 15 avec le moyen 14 d'actionnement/libération du frein de sécurité. Ce câble 15 est de préférence flexible et comporte une liaison électrique avec le moyen 14 d'actionnement/libération du frein de sécurité.

Avantageusement, le moyen 14 pour actionner ou libérer le frein de sécurité de la remorque est un vérin dont la première extrémité 140 est montée sur le bâti 16 de la remorque et dont la deuxième extrémité 141 est montée sur le frein de sécurité 12.

Avantageusement, le véhicule tracteur 2 comprend un fourreau 22 destiné à recevoir l'extrémité du câble 15 portant le capteur de proximité 13. La forme généralement en entonnoir du fourreau facilite l'engagement du câble 15 dans celui-ci.

Le capteur de proximité permet donc, en fonction du signal qu'il produit, de serrer ou de libérer le frein de sécurité 12 de la remorque, de manière automatique.

Aucune intervention du conducteur du véhicule tracteur n'est donc nécessaire sur la chaussée.

La également, la sécurité du conducteur du véhicule tracteur est améliorée.

Enfin, le dispositif selon l'invention prévoit avantageusement un système de transmission de données sans fil entre le véhicule tracteur 2 et la remorque 1, lequel est au moins apte à gérer les différentes fonctions de signalisation de la remorque.

Dans ces conditions, le conducteur du véhicule peut commander toutes les fonctions de signalisation de la remorque sans descendre du véhicule, car aucun câble électrique ne doit être branché ou selon le cas débranché entre le véhicule tracteur et la remorque pour transmettre les données de commande.

Lorsque le véhicule tracteur a mis en place la remorque de signalisation, une batterie prévue sur la remorque permet l'alimentation électrique qui est nécessaire au fonctionnement des différentes fonctions de signalisation de la remorque.

Par ailleurs, le système de transmission de données sans fil peut être utilisé pour la commande du vérin 3 de réglage en hauteur de l'anneau 10 de la remorque, lorsqu'un tel vérin 3 est prévu. En effet, la télécommande peut être utilisée pour communiquer avec le système de transmission de données sans fil, ce système gérant alors la commande du moteur du vérin 3. Dans ce cas, on comprend que la télécommande n'actionne pas directement le moteur du vérin, mais passe par le système de transmission de données sans fil gérant également toutes les fonctions de signalisation de la remorque.

Nous allons maintenant décrire les opérations de dételage et d'attelage du véhicule, dans le cas particulier où le dispositif selon l'invention comprend à la fois un vérin 3 de réglage en hauteur monté sur la roue jockey 11 de la remorque, des vérins de stabilisation de la remorque et un vérin pour la commande automatique du frein de sécurité de cette remorque, relié à un capteur de proximité, l'attelage 20 étant fixe.

Le dételage automatique de la remorque 1 au véhicule tracteur 2 s'effectue de la façon suivante.

Le conducteur du véhicule tracteur dispose tout d'abord la remorque 1 à l'endroit où il souhaite la laisser.

Il peut ensuite déverrouiller l'attelage 20 de l'anneau 10 de la remorque puis, faire avancer le véhicule tracteur 2 pour s'éloigner de la remorque 1.

Cet éloignement provoque la sortie du capteur de proximité 13 du fourreau 22 prévu sur l'attelage 20 du véhicule tracteur. Lorsque la distance entre le capteur de proximité 13 et le fourreau 22 dépasse une valeur seuil prédéterminée (détection du dételage de la remorque), cela engendre un serrage automatique du frein de sécurité 12 de la remorque, par actionnement du moteur du vérin 14 associé à ce frein de sécurité.

Enfin, le conducteur peut commander la descente en position basse des vérins de stabilisation de la remorque. Il convient de noter que cette étape pourrait être effectuée avant le dételage proprement dit de la remorque et donc, l'éloignement du véhicule tracteur. En effet, c'est le conducteur qui décide, par l'intermédiaire d'une télécommande, quand il convient de mettre en position les vérins de stabilisation de la remorque.

Dans la mesure où les vérins de stabilisation permettent de maintenir, par rapport au sol, la hauteur de l'anneau 10 de la remorque 1 à l'attelage 20 du véhicule tracteur 2, leur présence facilite l'attelage ultérieur du même véhicule tracteur.

L'attelage automatique de la remorque 1 au véhicule tracteur 2 s'effectue de la façon suivante.

Les vérins de stabilisation de la remorque sont en position basse et touchent donc le sol. Le frein de sécurité 12 de la remorque est actionné.

Le conducteur recule le véhicule tracteur en direction de la remorque.

A cet effet, la caméra peut l'aider dans ses manoeuvres, afin d'assurer l'alignement de l'attelage du véhicule par rapport à l'anneau 10 de la remorque 1.

Lorsque le véhicule tracteur 2 s'approche de l'anneau 10 de la remorque 1, le capteur de proximité 13 est amené à rentrer dans le fourreau 22 appartenant à l'attelage 20 du véhicule tracteur 2. Dans le même temps, l'anneau 10 de la remorque 1 vient s'accrocher à l'attelage 20 du véhicule tracteur 2.

Ceci engendre, en dessous d'une autre valeur seuil prédéterminée de la distance séparant le capteur de proximité 13 du fourreau 22 (détection de l'attelage du véhicule), la libération automatique du frein de sécurité 12 de la remorque, par actionnement du moteur du vérin 14 associé à ce frein de sécurité 12.

Le conducteur peut ensuite agir sur la télécommande pour rétracter les vérins de stabilisation de la remorque 1 en position haute.

A la suite de cette étape, le véhicule tracteur 2 peut démarrer avec la remorque 1 qui lui est attachée.

Bien entendu, si le véhicule tracteur 2 effectuant l'attelage n'est pas le même que celui qui a permis d'effectuer le dételage ou, selon un autre exemple, s'il s'agit du même véhicule mais avec un chargement différent, il est possible que le réglage en hauteur de la remorque 1 ne soit pas adapté pour effectuer un attelage automatique. Dans un tel cas, le vérin 3 de la roue jockey 11 permet de régler à nouveau la hauteur de l'anneau d'accrochage 10 de la remorque pour rendre l'accrochage automatique possible.

Les opérations de dételage et d'attelage sont ainsi effectuées sans que le conducteur n'ait besoin de quitter son véhicule.

La sécurité du conducteur de véhicule s'en trouve nettement améliorée.

Les étapes d'attelage/dételage susmentionnées ont été décrites dans le cas particulier de l'utilisation combinée du réglage en hauteur de l'anneau d'accrochage de la remorque, d'un capteur de proximité relié à un vérin susceptible de serrer/libérer le frein de sécurité de la remorque et de la commande de vérins de stabilisation de la remorque, l'attelage restant fixe.

Toutefois, on aurait pu effectuer une description similaire en prenant en compte le réglage en hauteur de l'attelage du véhicule tracteur à la place du réglage en hauteur effectué au niveau de la remorque, éventuellement en y ajoutant le réglage latéral de l'attelage.

Par ailleurs, la sécurité du conducteur du véhicule peut être améliorée avec le simple réglage en hauteur, à distance, de l'anneau 10 de la remorque 10 et/ou le simple réglage en hauteur, à distance, de l'attelage 20 du véhicule tracteur 2.

Dans ce même but, on pourrait également envisager simplement la mise en oeuvre du capteur de proximité 13 tel que décrit précédemment pour limiter les interventions humaines sur la chaussée autoroutière lors des opérations d'attelage/dételage.

Dans ce cas, le dispositif comporterait :
- un frein de sécurité 12 pour la remorque ;
- un capteur de proximité 13 de la remorque par rapport au véhicule;
- un moyen 14 pour actionner ou libérer automatiquement ledit frein de sécurité, en fonction des données fournies par le capteur de proximité.

Ce dispositif pourrait, de surcroît, comprendre toutes les caractéristiques du dispositif selon l'invention qui ont été décrites précédemment. En particulier, il pourrait en plus prévoir les moyens nécessaires au réglage en hauteur de l'anneau 10 de la remorque et/ou les moyens de réglage de la hauteur et/ou latéraux de l'attelage 20 du véhicule tracteur et/ou les vérins de stabilisation commandés à distance par le conducteur du véhicule tracteur.

Le procédé d'attelage automatique de la remorque 1 au véhicule tracteur 2 comprend alors les étapes suivantes :
- reculer le véhicule tracteur en direction de la remorque ;
- détecter la position relative entre la remorque et le véhicule tracteur,
- libérer automatiquement le frein de sécurité de la remorque, après que le détecteur a détecté l'attelage de la remorque au véhicule tracteur.

Avantageusement, la détection de l'attelage s'effectue avec une valeur seuil prédéterminée de la distance séparant le capteur de proximité 13 du fourreau 22.

Une opération de mise en place des vérins de stabilisation de la remorque peut ensuite être effectuée.

Par ailleurs, le procédé de dételage automatique de la remorque 1 au véhicule tracteur 2 :
- libérer automatiquement le moyen d'accrochage 10 de la remorque à l'attelage 20 du véhicule tracteur 2,
- détecter la position relative entre la remorque et le véhicule tracteur,
- serrer automatiquement le frein de sécurité de la remorque, après que le détecteur a détecté le dételage de la remorque au véhicule tracteur.

La libération du moyen d'accrochage 10 peut s'effectuer en rétractant, automatiquement ou sur commande du conducteur du véhicule tracteur, l'axe de verrouillage 21 de l'anneau 10.

Avantageusement, la détection du dételage s'effectue avec une autre valeur seuil prédéterminée de la distance séparant le capteur de proximité 13 du fourreau 22.

Par ailleurs, le procédé de dételage peut être complété par la rétractation des vérins de stabilisation de la remorque.

Enfin, dans l'ensemble des modes de réalisation concernés, on peut envisager plusieurs capteurs de proximité. En particulier, il est envisageable de prévoir deux capteurs de proximité, avantageusement identiques, disposés en parallèle. Ainsi, si l'un des capteurs de proximité fait défaut, le dispositif d'attelage/dételage peut continuer à fonctionner normalement.

Pendant l'opération d'attelage, une temporisation de quelques secondes, par exemple comprise entre 2s et 3s, est avantageusement mise en oeuvre entre la détection de la présence de l'attelage et la libération du frein de sécurité.

Avantageusement, les vérins de stabilisation sont munis de galets ou roulettes. En effet, il arrive parfois, lors de l'opération d'accrochage que le véhicule tracteur pousse la remorque, ce qui abime l'extrémité des vérins de stabilisation de la remorque qui sont en contact avec le sol. De plus, il peut également arriver que la fixation des vérins de stabilisation soit tordue. L'adoption de galets ou roulettes permet d'éviter ces inconvénients.

Au surplus, les vérins de stabilisation de la remorque sont avantageusement débrayables. On peut ainsi passer d'un mode de fonctionnement automatique à un mode de fonctionnement manuel et inversement. Cela peut être utile si les vérins de stabilisation venaient à se bloquer.

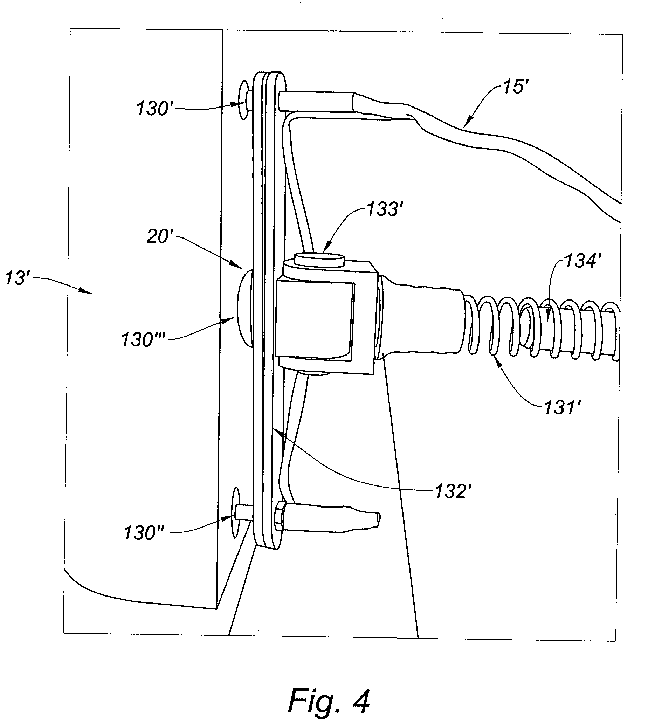

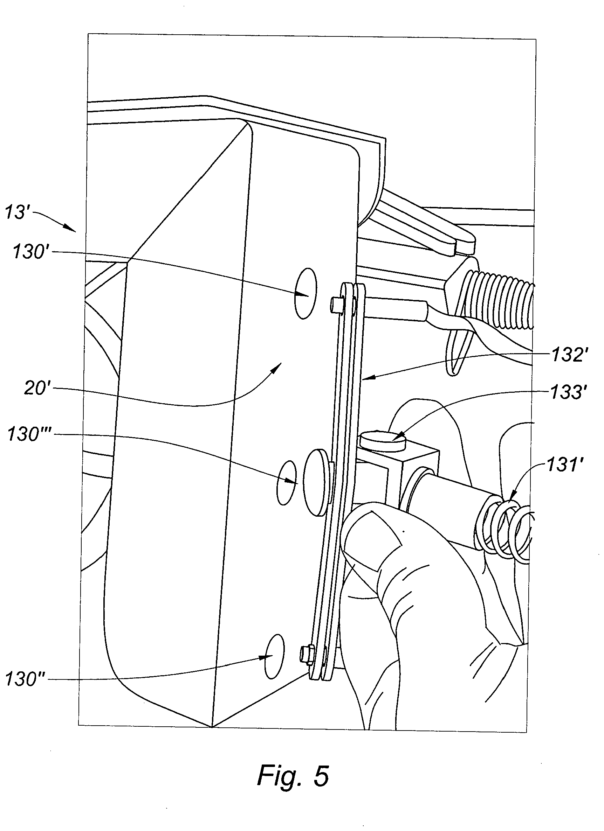

Enfin, il est à noter que les figures 4 et 5 représentent un capteur de proximité 13' susceptible d'être employé dans le cadre de l'invention, en position de connexion sur la figure 4 et en position de déconnexion sur la figure 5. Ce capteur de proximité 13' comprend un ou plusieurs aimant(s) permanent(s) 130', 130", 130"' montée sur une plaque 20' appartenant au véhicule tracteur. Ce capteur de proximité 13' comprend également un moyen 132' constitué d'une ou de plusieurs plaques jointives 132' montée(s) sur la remorque. La ou chaque plaque 132' se présentera généralement sous la forme d'une platine métallique. Ce moyen 132' est avantageusement aimantable pour faciliter la mise en contact avec les aimants permanents 130', 130", 130"'. Ainsi, lorsque le moyen 132' s'approche de la plaque 20', l'aimantation force la connexion entre ce moyen 132' et la plaque 20'.

Puis, un signal est envoyé par l'intermédiaire du câble 15', lequel comporte une connexion électrique avec le moyen d'actionnement/libération du frein de sécurité (non représenté). La connexion entre le capteur de proximité 13' et le moyen d'actionnement/libération du frein de sécurité peut être directe, mais en variante, peut également s'effectuer par l'intermédiaire d'un interrupteur/bouton ou d'une télécommande présent(e) dans la cabine conducteur. Dans le premier cas, la libération (ou inversement le serrage) du frein de sécurité s'effectue automatiquement sans aucune intervention du conducteur situé dans la cabine. Dans le deuxième cas, il y a également une libération (ou inversement un serrage) du frein de sécurité qui s'effectue automatiquement, mais par l'intermédiaire d'une intervention du conducteur situé dans la cabine.

Dans le cadre de l'invention, l'aspect automatique désigne en effet une action dans laquelle il n'y a aucune intervention manuelle du conducteur s'effectuant à l'extérieur de la cabine.

Il convient de noter que le capteur de proximité 13' n'a pas besoin d'un entonnoir de guidage, ni la définition d'un seuil en-deçà ou au-delà duquel il convient d'engager la libération ou le serrage du frein de sécurité.

Pour améliorer l'efficacité de la connexion entre le moyen 132' monté sur la remorque et la plaque 20' appartenant au véhicule tracteur, le moyen 132' est de préférence monté à rotation sur un axe de rotation vertical 133'. Par ce biais, le moyen 132' vient plus aisément en contact des aimants permanents logés dans la plaque 20'. Dans ce même but, le capteur de proximité 13' comprend avantageusement une tige 134', qui est la partie du capteur de proximité 13' montée sur la remorque, entourée d'un ressort axial 131'. Ainsi, lorsque le moyen 132' s'approche de la plaque 20', la force d'aimantation étire le ressort 131', ce qui ne gêne pas la connexion entre le moyen 132' et la plaque 20'.

Enfin, quel que soit le mode de réalisation envisagé, il convient de noter que le moyen d'actionnement/libération du frein de sécurité pourra être doublé. Ainsi, on peut envisager deux vérins montés sur le frein de sécurité, avantageusement de dimensions différentes. Il est possible de déverrouiller le grand vérin et de ne laisser en fonction que le plus petit vérin. Par ailleurs, en cas de défaillance du dispositif, il est possible de revenir en mode manuel.

Un câble de sécurité sera présent. En mode automatique, ce câble de sécurité n'est pas accroché au véhicule tracteur. Mais, il peut l'être si en fonctionnement manuel, de manière classique.

## Revendications

1. Ensemble comportant un véhicule tracteur (2) muni d'un attelage (20), une remorque (1) comportant un moyen d'accrochage (10) à l'attelage du véhicule tracteur se présentant par exemple sous la forme d'un anneau et, un dispositif d'attelage/dételage automatique de la remorque (1) au véhicule tracteur (2), ledit dispositif comprenant :
- un moyen (3) pour modifier par rapport au sol, la hauteur du moyen d'accrochage (10) de ladite remorque et/ou un moyen pour modifier par rapport au sol, la hauteur de l'attelage (20) du véhicule tracteur (2), ledit moyen (3) étant configuré de sorte à être télécommandable par un conducteur du véhicule tracteur ;
- un frein de sécurité (12) pour la remorque,
- un capteur de proximité (13, 13') de la remorque par rapport au véhicule tracteur (2), ledit capteur (13, 13') étant configuré de sorte à déterminer la distance entre la remorque (1) et le véhicule tracteur (2), et
- un moyen (14) pour actionner ou libérer ledit frein de sécurité, ledit moyen (14) fonctionnant automatiquement sur la base des données fournies par le capteur de proximité.

2. Ensemble selon la revendication 1, dans lequel la remorque comprenant une roue jockey (11), ledit moyen (3) pour modifier, par rapport au sol, la hauteur du moyen d'accrochage de la remorque est un vérin monte verticalement sur la roue jockey.

3. Ensemble selon l'une des revendications précédentes, dans lequel il est prévu un moyen pour déplacer l'attelage (20) latéralement.

4. Ensemble selon l'une des revendications précédentes, dans lequel il est prévu plusieurs vérins de stabilisation de la remorque et un ou plusieurs moyen(s) de commande de la position desdits vérins de stabilisation, afin notamment de maintenir le réglage en hauteur de la remorque après dételage.

5. Ensemble selon l'une des revendications précédentes, dans lequel le capteur de proximité (13, 13') est relié par un câble (15, 15') au moyen (14) d'actionnement/libération du frein de sécurité (12), ledit câble (15, 15') étant de préférence flexible et comportant une liaison électrique avec le moyen (14) d'actionnement/libération du frein de sécurité (12).

6. Ensemble selon l'une des revendications précédentes, dans lequel le moyen (14) pour actionner ou libérer le frein de sécurité de la remorque est un vérin dont la première extrémité (140) est montée sur le bâti (16) de la remorque et dont la deuxième extrémité (141) est montée sur le frein de sécurité (12).

7. Ensemble selon l'une des revendications precedentes, dans lequel le capteur de proximité (13') comprend une plaque (20') montée sur le véhicule tracteur et munie d'au moins un aimant permanent (130', 130", 130'") et un moyen (132') aimantable monté sur la remorque apte à coopérer avec ledit au moins un aimant permanent (130', 130", 130'") de la plaque (20').

8. Ensemble selon la revendication précédente, dans lequel le moyen (132') est monté à rotation sur un axe de rotation vertical.

9. Ensemble selon l'une des revendications 7 ou 8, dans lequel capteur de proximité (13') comprend une tige (134') par laquelle il est monte sur la remorque, ladite tige (134') étant entourée d'un ressort axial (131').

10. Ensemble selon l'une des revendications 5 ou 6, dans lequel il est prévu, sur le véhicule tracteur, un fourreau (22) destiné à recevoir l'extrémité du câble (15) portant le capteur de proximité (13).

11. Procède d'attelage automatique d'une remorque (1) à un véhicule tracteur (2) muni d'un attelage (20), ladite remorque comportant un moyen d'accrochage (10) a l'attelage du véhicule tracteur se présentant par exemple sous la forme d'un anneau, **caractérise en ce qu'**il comprend les étapes suivantes :
- reculer le véhicule tracteur en direction de la remorque ;
- détecter la position relative entre la remorque et le véhicule tracteur ;
- modifier la hauteur, par rapport au sol, du moyen d'accrochage de ladite remorque au véhicule tracteur et/ou modifier la hauteur, par rapport au sol, de l'attelage du véhicule tracteur, ladite modification s'effectuant par le biais d'une télécommande à disposition du conducteur du véhicule tracteur de préférence sous visualisation du conducteur afin de visualiser la position relative du moyen d'accrochage de la remorque a l'attelage du véhicule tracteur ;
- libérer un frein de sécurité de la remorque, ladite libération s'effectuant automatiquement après que le détecteur a détecté l'attelage de la remorque au véhicule tracteur.

12. Procédé selon la revendication précédente, dans lequel, pour modifier ladite hauteur, on modifie la position d'un vérin (3) monté verticalement sur une roue jockey (11) de la remorque.

13. Procédé selon l'une des revendications 11 ou 12, dans lequel il est prévu une étape de rétractation de la position de vérins de stabilisation de la remorque, après que la remorque a été attelé au véhicule tracteur.

## Patentansprüche

1. Anordnung, ein Zugfahrzeug (2) beinhaltend, das mit einer Kupplung (20) versehen ist, einem Anhänger (1), der ein Mittel zum Einhängen (10) in die Kupplung des Zugfahrzeugs beinhaltet, das sich beispielsweise in Form eines Rings präsentiert, und einer Vorrichtung zum automatischen Kuppeln/Entkuppeln des Anhängers (1) am Zugfahrzeug (2), wobei die Vorrichtung Folgendes umfasst:
- ein Mittel (3) zum Ändern der Höhe des Mittels zum Einhängen (10) des Anhängers in Bezug auf den Boden und/oder ein Mittel zum Ändern der Höhe der Kupplung (20) des Zugfahrzeugs (2) in Bezug auf den Boden, wobei das Mittel (3) so konfiguriert ist, dass es von einem Fahrer des Zugfahrzeugs fernbedienbar ist;
- eine Sicherheitsbremse (12) für den Anhänger,
- einen Näherungssensor (13, 13') des Anhängers in Bezug auf das Zugfahrzeug (2), wobei der Sensor (13, 13') so konfiguriert ist, um den Abstand zwischen dem Anhänger (1) und dem Zugfahrzeug (2) zu bestimmen, und
- ein Mittel (14) zum Betätigen oder Lösen der Sicherheitsbremse, wobei das Mittel (14) automatisch auf der Basis der vom Näherungssensor gelieferten Daten arbeitet.

2. Anordnung nach Anspruch 1, wobei der Anhänger ein Stützrad (11) umfasst, wobei das Mittel (3) zum Ändern der Höhe des Mittels zum Einhängen des Anhängers in Bezug auf den Boden ein Zylinder ist, der vertikal am Stützrad montiert ist.

3. Anordnung nach einem der vorstehenden Ansprüche, wobei ein Mittel zum seitlichen Bewegen der Kupplung (20) vorgesehen ist.

4. Anordnung nach einem der vorstehenden Ansprüche, wobei mehrere Stabilisierungszylinder für den Anhänger und ein oder mehrere Mittel zum Steuern der Position der Stabilisierungszylinder vorgesehen sind, insbesondere um die Höhenverstellung des Anhängers nach dem Entkuppeln aufrechtzuerhalten.

5. Anordnung nach einem der vorstehenden Ansprüche, wobei der Näherungssensor (13, 13') über ein Kabel (15, 15') mit dem Mittel (14) zum Betätigen/Lösen der Sicherheitsbremse (12) verbunden ist, wobei das Kabel (15, 15') vorzugsweise flexibel ist und eine elektrische Verbindung mit dem Mittel (14) zum Betätigen/Lösen der Sicherheitsbremse (12) beinhaltet.

6. Anordnung nach einem der vorstehenden Ansprüche, wobei das Mittel (14) zum Betätigen oder Lösen der Sicherheitsbremse des Anhängers ein Zylinder ist, dessen erstes Ende (140) am Rahmen (16) des Anhängers, und dessen zweites Ende (141) an der Sicherheitsbremse (12) montiert ist.

7. Anordnung nach einem der vorstehenden Ansprüche, wobei der Näherungssensor (13') eine Platte (20'), die am Zugfahrzeug montiert und mit mindestens einem Permanentmagneten (130', 130", 130'") versehen ist, und ein magnetisierbares Mittel (132'), das am Anhänger montiert ist, umfasst, das in der Lage ist, mit dem mindestens einen Permanentmagneten (130', 130", 130'") der Platte (20') zusammenzuwirken.

8. Anordnung nach dem vorstehenden Anspruch, wobei das Mittel (132') drehbar auf einer vertikalen Drehachse montiert ist.

9. Anordnung nach einem der Ansprüche 7 oder 8, wobei der Näherungssensor (13') eine Stange (134') umfasst, mit der er auf dem Anhänger montiert ist, wobei die Stange (134') von einer axialen Feder (131') umgeben ist.

10. Anordnung nach einem der Ansprüche 5 oder 6, wobei eine Hülse (22) am Zugfahrzeug vorgesehen ist, die dazu bestimmt ist, das Ende des den Näherungssensor (13) tragenden Kabels (15) aufzunehmen.

11. Verfahren zur automatischen Kupplung eines Anhängers (1) an ein Zugfahrzeug (2), das mit einer Kupplung (20) versehen ist, wobei der Anhänger ein Mittel (10) zum Einhängen in die Kupplung des Zugfahrzeugs, beispielsweise in Form eines Rings, beinhaltet, **dadurch gekennzeichnet, dass** es die folgenden Schritte umfasst:
- Zurücksetzen des Zugfahrzeugs in Richtung des Anhängers;
- Erfassen der relativen Position zwischen dem Anhänger und dem Zugfahrzeug;
- Ändern der Höhe des Mittels zum Einhängen des Anhängers in das Zugfahrzeug in Bezug auf den Boden und/oder Ändern der Höhe der Kupplung des Zugfahrzeugs in Bezug auf den Boden, wobei diese Änderung mittels einer dem Fahrer des Zugfahrzeugs zur Verfügung stehenden Fernbedienung, vorzugsweise unter Visualisierung für den Fahrer, durchgeführt wird, um die relative Position des Mittels zum Einhängen des Anhängers in die Kupplung des Zugfahrzeugs zu visualisieren;
- Lösen einer Sicherheitsbremse des Anhängers, wobei die Lösung automatisch durchgeführt wird, nachdem der Detektor die Anhängerkupplung am Zugfahrzeug detektiert hat.

12. Verfahren nach dem vorstehenden Anspruch, wobei zur Änderung der Höhe die Position eines Zylinders (3), der vertikal auf einem Stützrad (11) des Anhängers montiert ist, geändert wird.

13. Verfahren nach einem der Ansprüche 11 oder 12, wobei ein Schritt zum Zurückziehen der Position von Stabilisierungszylindern des Anhängers vorgesehen ist, nachdem der Anhänger an das Zugfahrzeug gekuppelt wurde.

## Claims

1. Assembly comprising a towing vehicle (2) provided with a trailer hitch (20), a trailer (1) comprising a means for hooking (10) onto the trailer hitch of the towing vehicle having for example the form of a ring and, a device for automatically coupling/uncoupling a trailer (1) to/from the towing vehicle (2), said device comprising:
- a means (3) for modifying relative to the ground, the height of the means for hooking (10) said trailer and/or a means for modifying relative to the ground, the height of the trailer hitch (20) of the towing vehicle (2), said means (3) being configured in such a way as to be remotely controlled by a driver of the towing vehicle;
- a safety brake (12) for the trailer,
- a proximity sensor (13, 13') of the trailer relative to the towing vehicle (2), said sensor (13, 13') being configured in such a way as to determine the distance between the trailer (1) and the towing vehicle (2), and
- a means (14) for activating or releasing said safety brake, said means (14) operating automatically in accordance with data supplied by the proximity sensor.

2. Assembly according to claim 1, wherein the trailer comprising a jockey wheel (11), said means (3) for modifying, relative to the ground, the height of the means for hooking the trailer is a cylinder mounted vertically on the jockey wheel.

3. Assembly according to one of the preceding claims, wherein a means for laterally moving the trailer hitch (20) is provided.

4. Assembly according to one of the preceding claims, wherein several cylinders for stabilising the trailer and one or several means for controlling the position of said stabilisation cylinders are provided, so as in particular to maintain the height setting of the trailer after uncoupling.

5. Assembly according to one of the preceding claims, wherein the proximity sensor (13, 13') is connected by a cable (15, 15') to the means (14) for activating/releasing the safety brake (12), said cable (15, 15') being more preferably flexible and comprising an electrical connection with the means (14) for activating/releasing the safety brake (12).

6. Assembly according to one of the preceding claims, wherein the means (14) for activating or releasing the safety brake of the trailer is a cylinder of which the first end (140) is mounted on the frame (16) of the trailer and of which the second end (141) is mounted on the safety brake (12).

7. Assembly according to one of the preceding claims, wherein the proximity sensor (13') comprises a plate (20') mounted on the towing vehicle and provided with at least one permanent magnet (130', 130", 130'") and a magnetisable means (132') mounted on the trailer able to cooperate with said at least one permanent magnet (130', 130", 130"') of the plate (20').

8. Assembly according to the preceding claim, wherein the means (132') is rotationally mounted about a vertical axis of rotation.

9. Assembly according to one of claims 7 or 8, wherein the proximity sensor (13') comprises a rod (134') by which it is mounted on the trailer, said rod (134') being surrounded by an axial spring (131').

10. Assembly according to one of claims 5 or 6, wherein, on the towing vehicle, a sheath (22) is provided intended to receive the end of the cable (15) bearing the proximity sensor (13).

11. Method for automatically coupling a trailer (1) to a towing vehicle (2) provided with a trailer hitch (20), said trailer comprising a means for hooking (10) to the trailer hitch of the towing vehicle having for example the form of a ring, **characterised in that** it comprises the following steps:
- reversing the towing vehicle in the direction of the trailer;
- detecting the relative position between the trailer and the towing vehicle;
- modifying the height, relative to the ground, of the means for hooking said trailer to the towing vehicle and/or modifying the height, relative to the ground, of the trailer hitch of the towing vehicle, said modification being carried out through a remote control available to the driver of the towing vehicle more preferably under the visualisation of the driver in order to view the relative position of the means for hooking the trailer to the trailer hitch of the towing vehicle;
- releasing a safety brake of the trailer, said releasing being carried out automatically after the detector has detected the coupling of the trailer to the towing vehicle.

12. Method according to the preceding claim, wherein, in order to modify said height, the position of a cylinder (3) mounted vertically on a jockey wheel (11) of the trailer is modified.

13. Method according to one of claims 11 or 12, wherein a step of retracting the position of the stabilisation cylinders of the trailer is provided, after the trailer has been coupled to the towing vehicle.
